**Europäisches Patentamt**

**European Patent Office**

**Office européen des brevets**

(19)

(11) Veröffentlichungsnummer: **0 153 481**
**B1**

(12) # EUROPÄISCHE PATENTSCHRIFT

(45) Veröffentlichungstag der Patentschrift:
**16.03.88**

(51) Int. Cl.⁴: **B 23 K 20/10**

(21) Anmeldenummer: **84115751.4**

(22) Anmeldetag: **18.12.84**

(54) Ultraschallschweissvorrichtung für metallische Werkstücke.

(30) Priorität: **29.02.84 DE 3407472**

(43) Veröffentlichungstag der Anmeldung:
**04.09.85 Patentblatt 85/36**

(45) Bekanntmachung des Hinweises auf die Patenterteilung:
**16.03.88 Patentblatt 88/11**

(84) Benannte Vertragsstaaten:
**DE FR GB NL**

(56) Entgegenhaltungen:
**EP-A-0 083 707**
**FR-A-2 175 738**
**US-A-3 917 146**

**ELEKRTROTECHNISCHE ZEITSCHRIFT, Band 20, Nr. 5, März 1968, Seiten 101 - 104, Berlin (DE) R. STEMMER:"Das Ultraschallschweißen dünner Bleche und Folien"**

(73) Patentinhaber: **Siemens Aktiengesellschaft Berlin und München, Wittelsbacherplatz 2, D-8000 München 2 (DE)**

(72) Erfinder: **Moll, Helmut, Haselhofstrasse 32, D-8520 Erlangen- Tennenlohe (DE)**
Erfinder: **Krause, Ralf- Dieter, Reichenschwander strasse 18, D-8500 Nürnberg (DE)**

## Beschreibung

Die Erfindung bezieht sich auf eine Ultraschallschweißvorrichtung für metallische Werkstücke, insbesondere zum Verbinden von Drähten und/oder Litzen, gemäß dem Oberbegriff des Patentanspruches 1.

Die Ultraschallverschweißung von metallischen Werkstücken, insbesondere auch von Drähten und/oder Litzen ist vom Stand der Technik vorbekannt. Übliche Ultraschallschweißgeräte haben neben dem eigentlichen Schallerzeugungssystem jeweils als aktive Elektrode eine sogenannte Sonotrode zur Übertragung der Ultraschallschwingungen und als passive Elektrode einen sogenannten Amboß, welche die Werkzeuge für die zu verschweißenden Teile bilden. Aus der EP-A1-0 083 707 (DE-A1-31 51 151) ist eine Vorrichtung dieser Art speziell zum Verbinden zweier metallischer Leiter bekannt, bei der die Sonotrode an ihrer Umfangsfläche zumindest eine den zu verbindenden Leitern angepaßte Ausnehmung aufweist, die von einer Sonotrodenrandfläche ausgeht, entlang der eine, einen der Ausnehmung angepaßten Vorsprung aufweisende Fläche des Ambosses verschiebbar ist. Dabei bildet in der die Leiter verbindenden Stellung von Sonotrode und Amboß die Ausnehmung und der zugeordnete Vorsprung eine parallel oder nahezu parallel zur Sonotrodenschwingungsachse verlaufende, an seinen Stirnseiten zum Durchführen der Leiter geöffneten, einen Verdichtungsraum darstellenden Hohlraum. Weiterhin sollen Vorsprung und Ausnehmung derart aufeinander abgestimmt sein, daß durch Wechselwirkung von Sonotrode und Amboß die Verschweißung der metallischen Leiter erfolgen kann.

Bei obigem Stand der Technik wird als vorteilhaft angesehen, daß die zu verbindenden Leiter nur noch in den Verdichtungsraum eingebracht zu werden brauchen, um sie anschließend verbinden zu können. Nachteilig ist allerdings bei einer Vorrichtung mit derart ausgebildeter Sonotrode, daß deren Handhabung zusammen mit dem zugehörigen Amboß gemeinsam mit der gesamten Schweißvorrichtung noch relativ umständlich ist. Bei konkreter Realisierung eines solchen Gerätes besteht die als Schweißzange bezeichnete Vorrichtung aus einem Chassis, auf dem einerseits das Schwingungssystem mit Wandler, Sonotrode und gegebenenfalls einem Transformationsstück (Booster) und andererseits der Amboß gelagert ist. Dabei wird speziell der Amboß in einem Schwenk- oder Drehlager geführt, da die Realisierung einer Schwenkbewegung leichter zu beherrschen ist als eine Parallelverschiebung. Die Lagereinrichtungen machen insgesamt einen vergleichsweise voluminösen und schwergewichtigen Aufbau der Vorrichtung notwendig.

Bei dem bekannten Gerät läß es sich daher nicht vermeiden, daß die gesamte Vorrichtung jeweils für den Verschweißvorgang ortsfest abgestellt werden muß, um die zu verbindenden Leiter achsenparallel zur Sonotrode in den zugehörigen Verdichtungsraum einzuführen.

Aus der US-A-3 917 146 ist weiterhin eine Ultraschallschweißvorrichtung bekannt, bei welcher ein schwingungsmäßig entkoppelter Amboß mechanisch mit der Schwingungseinheit aus Schallerzeugungssystem, Transformationsstück und Sonotrode verbunden ist. Zur schwingungsmäßigen Entkopplung ist dabei ein Träger als Lagereinrichtung für den Amboß über Blattfedern in zwei antimodalen Schwingungsmaxima der Schwingungseinheit befestigt. Zur Bildung eines Verdichtungsraumes wird die vordere Amboßbacke über die ansonsten parallel geführte Lagereinrichtung angehoben, wozu eine mechanische Umlenkeinrichtung notwendig ist. Es ist zwar eine Handhabungseinrichtung vorhanden, um einen wechselnden Einsatz zu ermöglichen. Trotzdem ist die Vorrichtung immer noch sehr unhandlich und kann nicht frei geführt werden.

Aufgabe der Erfindung ist es demgegenüber, eine Ultraschallschweißvorrichtung zu schaffen, die so kompakt und leichtgewichtig ist, daß sie für eine Verwendung an wechselnden Einsatzorten und manuelle Handhabung geeignet ist.

Die Aufgabe ist erfindungsgemäß durch die Gesamtheit der Merkmale des Patentanspruches 1 gelöst. Dabei beinhaltet das Kennzeichen die gegenüber der US-A-3 917 146 neuen Merkmale. Vorteilhafte Weiterbildungen sind in den Unteransprüchen angegeben, die neben der Ausbildung der Ringhalterung mit Hubamboß auch die Ausbildung des damit zusammenwirkenden Sonotrodenkopfes beinhalten.

Mit der Erfindung ist eine Ultraschallschweißvorrichtung geschaffen, die besonders kompakt und als variables Handgerät einsetzbar ist. Das die Schwingungseinheit umgebene Halterungsrohr ist in den Schwingungsknoten gelagert, was zwar an sich aus der "Elektrotechnischen Zeitschrift", Band 20 (1968), Seite 103, Bild 6 für eine stationäre Anlage bekannt ist. Demgegenüber läßt sich bei der Erfindung aufgrund der guten schwingungsmäßigen Entkopplung das Halterungsrohr direkt zur Handhabung auch mittels einer Hand verwenden. Die Lager- und Hubeinrichtung für den Amboß verlängert das Halterungsrohr zum Sonotrodenkopf hin und bildet dort eine Ringhalterung für den Amboß, der als Hubamboß in der Stirnfläche der Sonotrode geführt ist.

Bei der Realisierung der Erfindung weist die Sonotrode im Gegensatz zur EP-A1-0 083 707 keine Ausnehmungen an der Umfangsfläche auf, sondern Vertiefungen als sogenannte Aussparungen an der Stirnfläche des Sonotrodenkopfes. Die Aussparung kann von parallelen Flächen begrenzt sein, zwischen denen der Amboß als Schieber linear bewegbar ist. Von der über die Vertiefung zurückversetzten Sonotrodenstirnfläche wird zusammen mit dem Amboß ein Hohlraum von fünf Flächen begrenzt, so daß ein Verdichtungsraum für Draht- und/oder Litzenenden gebildet wird.

Bei der Erfindung läßt sich durch die Ausbildung der Sonotrode erreichen, daß der Amboß weitgehend mittig zur Sonotrodenachse und damit zur Achse der gesamten Schwingungseinheit geführt wird. Störende Drehmomente sind dadurch weitgehend ausgeschaltet, wodurch der Aufbau der Ultraschallschweißvorrichtung im erfindungsgemäßen Sinne begünstigt wird. Diese Vorrichtung läßt sich damit als Handgerät für einen flexiblen Betrieb an wechselnden Einsatzorten realisieren. Speziell bei der Erstellung von Kabelbäumen lassen sich die Draht- und/oder Litzenenden unmittelbar am Verlegebrett verschweißen, so daß sich eine erhebliche Zeitersparnis ergibt.

Weitere Einzelheiten und Vorteile der Erfindung ergeben sich aus der nachfolgenden Figurenbeschreibung eines Ausführungsbeispiels anhand der Zeichrung in Verbindung mit den Ansprüchen.

Es zeigen

Fig 1 eine Seitenansicht der gesamten Ultraschallschweißvorrichtung in teilweise geschnittener Form.

Fig 2 eine Frontansicht des Ultraschallschweißkopfes.

Fig 3 einen Schnitt längs der Linie III-III in Fig 1.

Fig 4 einen Schnitt durch die Halte- und Hubeinrichtung für den Amboß längs der Linie IV-IV in Fig 2 und

Fig 5 einen Schnitt gemäß der Linie V-V in Fig 1 und Fig 2.

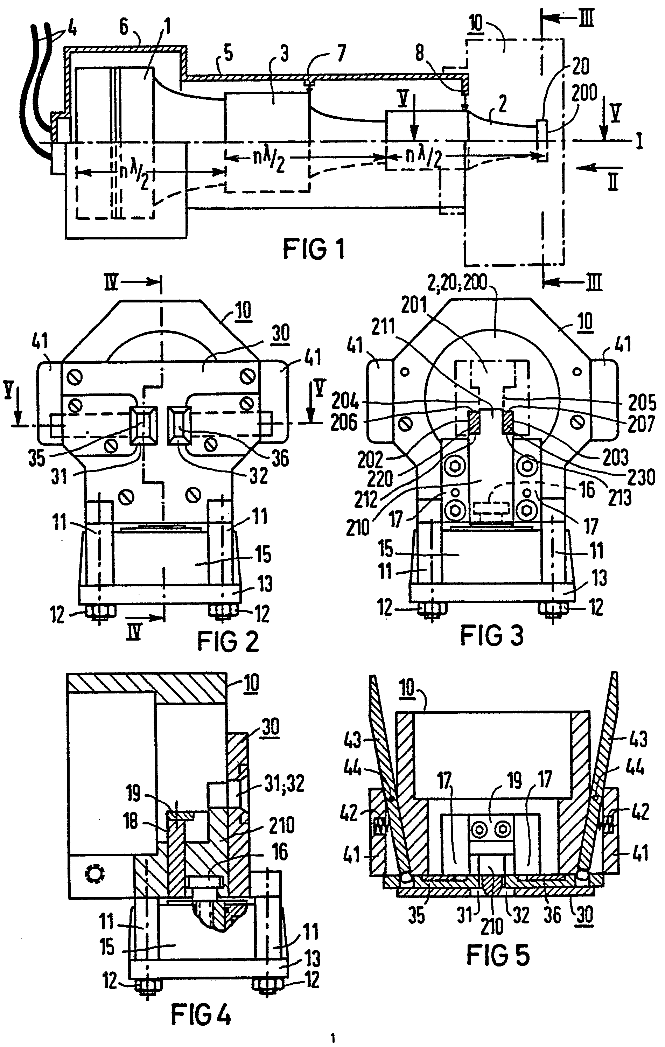

Die Fig 1 einerseits sowie die Figuren 2 bis 5 sind nicht maßstabsgerecht zueinander; speziell die Gesamtansicht nach Fig 1 ist als schematische Darstellung auf die wesentlichen Elemente reduziert worden.

In der nachfolgenden Beschreibung wird auf die elektrische Versorgung mit dem zugehörigen Generator nicht im einzelnen eingegangen. Prinzipiell können bekannte Generatoren verwendet werden. Die Verbindung zur nachfolgend beschriebenen Vorrichtung erfolgt über flexible Leitungen, so daß die erfindungsgemäße Ultraschallschweißvorrichtung frei geführt werden kann. Zur Auslösung des Verschweißvorgangs kann ein Fußschalter vorhanden sein.

In Fig 1 ist eine Schwingunseinheit für Ultraschall gezeigt, wie sie vom Stand der Technik bekannt ist. Eine solche Schwingungseinheit besteht üblicherweise aus einem piezokeramischen Ultraschallwandler 1, der elektrisch erregbar ist und mechanische Schwingungen charakteristischer Frequenz, beispielsweise bei etwa 20 kHz, abgibt, einem Ultraschallwerkzeug 2, welches weiter unten im einzelnen beschrieben wird, sowie aus einem Transformationsstück 3 für Ultraschall. Durch das auch als "Booster" bezeichnete Transformationsstück 3 wird eine Schwingungsamplitude anwendungsbezogen erzeugt, beispielsweise von 20 μm, und auf das als "Sonotrode" bezeichnete Ultraschallwerkzeug 2 weitergeleitet. Vom Sonotrodenkopf 20 werden Ultraschallschwingungen vergrößerter Amplitude, beispsielsweise von 30 bis 40 μm, auf zu verschweißende Werkstücke weitergeleitet. Mit 4 sind die elektrischen Anschlußleitungen bezeichnet, die zum (nicht dargestellten) Generator führen.

Die Schwingungseinheit ist üblicherweise in einem Halterungsrohr 5 mit Ansatzteil 6 entkoppelt angeordnet. Zur Entkopplung sind Lagereinrichtungen 7 und 8 vorhanden, die im allgemeinen in den Ebenen der Schwingungsknoten im Abstand von n.λ/2 angeordnet sind, wobei λ die Wellenlänge der Ultraschallschwingungen und n eine ganze Zahl bedeuten. Möglich wäre auch eine Lagerung in Schwingungsbauchebenen, wenn jeweils über entsprechende Membranlagerungen die Entkopplung sichergestellt ist.

In Fig 1 kennzeichnet das Bezugszeichen 10 eine Ringhalterung, die am proximalen Teil des Halterungsrohres 5 um den Sonotrodenkopf 20 herum angebracht ist und an ihrem unteren Ende eine Lager- und Hubeinrichtung für einen Schieber als Ultraschallamboß trägt. Der Aufbau dieses neugeschaffenen Ultraschallschweißkopfes wird anhand der weiteren Figuren näher erläutert:

Aus Fig 2 ist ersichtlich, daß die Ringhalterung 10 außen von den Flächen eines Sechsecks und innen von einer Kreisfläche begrenzt ist. An ihrem unteren Ende trägt die Ringhalterung 10 eine Lager- und Hubeinrichtung für einen Amboß, die im einzelnen aus vier mittels Schrauben 12 an der Ringhalterung 10 befestigten Bolzen 11 besteht, die eine Querauflage 13 zur Aufnahme eines Zylinders mit Druckkolben 15 als Hubeinrichtung tragen.

Frontseitig ist die Ringhalterung 10 durch eine Abschlußplatte 30 mit zwei Fensteröffnungen 31 und 32 abgedeckt. Die Öffnungen 31 und 32 sind durch federbelastete Schieber 35 und 36 verschlossen, die durch manuell aktivierbare Betätigungselemente geöffnet werden können, wobei die Schieber 35 und 36 zum Festklemmen von Drähten und/oder Litzenenden geeignet sind. Dies wird weiter unten noch im einzelnen beschrieben.

Aus der Schnittdarstellung nach Fig 3 ist das Zusammenwirken des Ultraschallwerkzeuges aus Sonotrode und Amboß durch die als Ringhalterung 10 ausgebildete Lager- und Hubeinrichtung für den als Schieber wirksam werdenden Amboß ersichtlich: Die Stirnfläche des Sonotrodenkopfes 20 ist mit 200 bezeichnet. Die Sonotrodenstirnfläche 200 weist eine mittige Aussparung 201 auf, die vom unteren Rand des Sonotrodenkopfes 20 kantenparallel mit Wänden 202 und 203 in vorgegebener Breite verläuft, Vorsprünge 204 und 205 im rechten Winkel bildet und im mittleren Teil der Stirnfläche 200, d.h. im Bereich der Achse I, mit geringerer Breite verläuft. Im oberen Teil der Sonotrodenstirnfläche 200 erweitert sich die Aussparung entsprechend über rechte Winkel und verläuft wiederum kantenparallel bis zum oberen Rand des Sonotrodenkopfes 20. Eine Sonotrodenstirnfläche 200 mit derart ausgebildeter Aussparung 201 kann in der gezeigten Betriebsstellung oder um 180° gedreht verwendet werden.

Auf dem auf der Querauflage 13 getragenen Druckkolben 15 mit Ansatzstück 16 ist, zwischen zwei parallelen Schienen 17 gefürt, ein Amboß 210 verschiebbar angeordnet. Der Anboß 210 ist mit seinem vorderen Teil 211 auf die Aussparung 201 in der Sonotrodenstirnfläche 200 abgestimmt, und zwar derart daß die Amboßbreite der Breite der Aussparung 201 entspricht und vom Vorsprung 211 des Ambosses im Zusammenwirken mit den Vorsprüngen 204 und 205 der Aussparung 201 jeweils ein Verdichtungsraum gebildet wird. Diese sind in Fig 3 mit 220 und 230 bezeichnet. Für unterschiedliche bestimmungsgemäße Anwendungen können die Vorsprünge 204 und 205 der Aussparung 201 sowie der zugehörige Vorsprung 211 am Amboß 210 konstruktiv unterschiedlich ausgebildet sein.

Bei der beschriebenen Ausbildung nach Fig 3 ist wesentlich, daß der Amboß 210 als Schieber mit seinem Vorsprung 211 in der Aussparung 201 der Sonotrodenstirnfläche 200 geführt ist. Es wird dadurch von der zurückversetzten Sonotrodenstirnfläche mit den Arbeitsflächen der Ausnehmung 201 und des Ambosses 210 ein von fünf Flächen begrenzter Verdichtungsraum 220 bzw. 230 gebildet. Nach Einführen von Draht bzw. Litzenenden bis zum Anschlag und Verkleinerung des Verdichtungsraumes 220 bzw. 230 können durch Druckausübung und gleichzeitiger Einwirkung von Ultraschall durch die erzeugten Reibkräfte eine Verschweißung und damit eine dauerhafte Verbindung der Draht- bzw. Litzenenden erreicht werden.

Aus der gemäß Fig 4 in Achsenrichtung verlaufenden Schnittdarstellung des Schweißkopfes mit als Ringhalterung ausgebildeter Lager- und Hubeinrichtung 10 und den oben beschriebenen Einzelheiten ist der Funktionszusammenhang der neuen Vorrichtung noch deutlicher erkennbar. Es ist insbesondere ersichtlich, daß das obere Ansatzteil 16 des Druckkolbens 15 eine Auflage bildet, auf die der Amboß 210 als austauschbarer Schieber aufsetzbar ist. Rückseitig wird der Amboß 210 durch die Schiene 18 mit Querriegel 19 geführt, welche einen oberen Anschlag für den Schieber bildet. An der Vorderseite des Ambosses 210 schließt sich die Abdeckplatte 30 mit Fensteröffnungen 31 und 32 an. Dabei sind die Fensteröffnungen 31 und 32 der Abdeckplatte 30 konstruktiv derart bemessen, daß beim Durchschieben der Draht- bzw. Litzenenden letztere in den von Sonotrodenstirnfläche 200 und Amboß 210 gebildeten Verdichtungsraum 220 bzw. 230 eintauchen.

Aus Fig 5 kann weiterhin die Funktionsweise der Klemmeinrichtung konstruktiv entnommen werden: Neben den bereits beschriebenen Einzelheiten von Ringhalterung 10 und Abdeckplatte 30 ist eine Betätigungseinrichtung für die Schieber 35 und 36 gezeigt: Auf der Ringhalterung 10 befinden sich auf jeder Seite Aufsetzstücke 41, in denen jeweils Druckfedern 42 angeordnet sind. Die Druckfedern 42 drücken auf in Drehlagern 44 schwenkbar gelagerte Handbetätigungshebel 43 derart, daß normalerweise die in der Abdeckplatte 30 beweglich gelagerten Schieber 35 und 36 die Öffnungen 31 und 32 verschließen. Durch Fingerdruck auf die Betätigungshebel 43 lassen sich die Fenster 31 und 32 öffnen, wobei bei eingeschobenen Drahtenden durch den Gegendruck der Schieber 35 und 36 bereits eine gewisse Fixierung vor der eigentlichen Verschweißung erreicht ist.

Letzteres ist für die Praxis vorteilhaft: Die beispielsweise durch Aufhängung gewichtsentlastet geführte Vorrichtung kann unmittelbar am Verlegebrett für Kabelbäume zu den einzelnen Abzweigungen geführt werden. Nach Öffnen der Schieber 35 und 36 für die Fenster 31 und 32 werden Drahtenden bis zum Anschlag eingeschoben und in der Schweißposition festgeklemmt. Der Benutzer kann dabei das Halterungsrohr 5 der Vorrichtung gleichermaßen als Handhabungseinrichtung führen, während die Aktivierung von Schweißkraft und Ultraschalleinwirkung beispielsweise durch einen Fußschalter erfolgt.

Bei der beschriebenen Vorrichtung ist besonders vorteilhaft, daß der Amboß als Schieber mittig in der Sonotrodenstirnfläche geführt ist. Dadurch können in Bezug auf die Mittelachse der gesamten Vorrichtung kaum größere Drehmomente entstehen, die kompensiert werden müßten.

Es ist somit eine Ultraschallschweißvorrichtung mit vereinfachter Lagerung des Ambosses und Einrichtung für eine Hubbewegung geschaffen, bei der auf ein zusätzliches Chassis vollkommen verzichtet ist. Insgesamt kann dadurch die gesamte Schweißvorrichtung äußerst kompakt gehalten werden, wobei das Gewicht auf etwa ein Fünftel von bekannten tragbaren Geräten reduziert ist, so daß die Vorrichtung jetzt als flexibel einsetzbare Handzange zur Anwendung kommen kann. Die Verfahrensparameter für Kraft bzw. Druck einerseits und Ultraschalleinwirkung andererseits für eine hinreichende Verschweißung entsprechen dabei denen des Standes der Technik.

Gegenüber den stationär angeordneten und auch den tragbaren, aber immer nur ortsfest aktivierbaren Schweißvorrichtungen werden somit praxisgerechte Verbesserungen erzielt.

**Patentansprüche**

1. Ultraschallschweißvorrichtung für metallische Werkstücke, insbesondere zum Verbinden von Drähten-und/oder Litzen, mit einer Schwingungseinheit (1 - 3) aus Ultraschallwandler (1) und Ultraschall-Sonotrode (2) als aktiver Schweißelektrode, der ein Transformationsstück (3) zur Anpassung der Ultraschallamplituden vorgeschaltet ist, sowie mit einem Amboß (210) als. Gegenelektrode, wobei Sonotrode (2) und Amboß (210) zur Bildung eines Verdichtungsraumes (220, 230) relativ zueinander bewegbar sind und der Amboß (210) schwingungsmäßig entkoppelt mechanisch mit der Schwingungseinheit (1 - 3) verbunden ist, wobei die Schwingungseinheit (1 - 3) ihrerseits schwingungsmäßig entkoppelt mit einer Handhabungseinrichtung verbunden ist, die gleichermaßen eine Lager- und Hubeinrichtung (10) für den Amboß (210) trägt , dadurch gekennzeichnet, daß die Handhabungseinrichtung ein Halterungsrohr (5) ist, in dem die Sonotrode (2) und/oder das Transformationsstück (3) in den Ebenen ihrer Schwingungsknoten gelagert sind, und daß das Halterungsrohr (5) von der Schwingungsknotenebene der Sonotrode (2) ausgehend durch die Lager- und Hubeinrichtung (10) für den Amboß (210) als Ringhalterung um die Sonotrode (2) über den Sonotrodenkopf (20) verlängert ist.

2. Ultraschallschweißvorrichtung nach Anspruch 1 , dadurch gekennzeichnet , daß die Ringhalterung (10) durch eine Abschlußplatte (30) mit wenigstens einer Fensteröffnung (31, 32) abgeschlossen ist.

3. Ultraschallschweißvorrichtung nach Anspruch 2 , dadurch gekennzeichnet , daß die Fensteröffnungen (31, 32) mit federbelasteten Schiebern (35, 36) als Klemmeinrichtung für Drähte und/oder Litzen versehen sind.

4. Ultraschallschweißvorrichtung nach Anspruch 1 , dadurch gekennzeichnet, daß die Lager- und Hubeinrichtung (20) für den Amboß (210) einen Druckkolben (15) zum Aufbringen der Schweißkraft aufweist.

5. Ultraschallschweißvorrichtung nach Anspruch 4 , dadurch gekennzeichnet, daß der Amboß (210) als Austauschteil auf einen Ansatzbolzen (16) des Druckkolbens (15) aufsteckbar ist.

6. Ultraschallschweißvorrichtung nach Anspruch 1 , dadurch gekennzeichnet , daß die Sonotrode (2) auf der Stirnfläche (200) des Sonotrodenkopfes (20) eine Aussparung (201) aufweist.

7. Ultraschallschweißvorrichtung nach Anspruch 6 , dadurch gekennzeichnet , daß die Aussparung (201) zur Umfangsfläche des Sonotrodenkopfes (20) hin offen ist, wobei der Amboß (210) als Schieber in der Aussparung (201) angeordnet ist.

8. Ultraschallschweißvorrichtung nach Anspruch 7 , dadurch gekennzeichnet , daß die Aussparung (201) in der Sonotrodenstirnfläche (200) wenigstens einen Vorsprung (202, 203) zur Bildung des Verdichtungsraumes im Zusammenwirken mit einem Vorsprung (211) des verschiebbaren Ambosses (210) aufweist, wodurch Arbeitsflächen (206, 207, 212, 213) in der Aussparung (201) in Schwingungsrichtung der Sonotrode (2) einerseits und am Amboß (210) andererseits senkrecht zu dessen Bewegungsrichtung gebildet werden.

9. Ultraschallschweißvorrichtung nach Anspruch 8 , dadurch gekennzeichnet , daß die in Schwingungsrichtung zurückversetzte Sonotrodenstirnfläche (200) zusammen mit dem Amboß (210) einen von fünf Flächen abgeschlossenen Verdichtungsraum (220) für Draht- und/oder Litzenenden (250) bildet.

**Claims**

1. An ultrasonic welding appliance for metallic workpieces, in particular for the purpose of connecting wires and/or cables, having an oscillator (1 - 3) composed of an ultrasonic transducer ( 1) and an ultrasound sonotrode (2) as the active welding elect rode, which is aligned with a transforming section (3) for adjusting the ultrasonic amplitudes, and with an anvil (210) as a counter-electrode, whereby the sonotrode (2) and anvil (210) are movable in relation to each other for the formation of a compression space (220, 230) and the anvil is connected mechanically with the oscillation unit (1 - 3) so as to be balanced with regard to oscillation, whereby the oscillator unit (1 - 3) on its side is connected with an operating device, so as to be balanced with regard to oscillation, which (operating device) carries equally a bearing and lifting device (10) for the anvil (210), characterised in that the operating device is a supporting tube (5), in which the sonotrode (2) and/or the transforming section (3) are supported in the planes of their oscillation nodes and that the supporting tube (5), starting from the plane of the oscillation node of the sonotrode (2) is extended by the bearing and lifting device (10) for the anvil (210) as a ring-support around the sonotrode (2) over the sonotrode head (20).

2. An ultrasound-welding appliance as claimed in Claim 1, characterised in that the ring-support (10) is closed by a stop plate (30) with at least one window-opening (31, 32).

3. An ultrasound-welding appliance as claimed in Claim 2, characterised in that the window-openings (31, 32) are provided with spring-loaded sliders (35, 36) as a terminal device for wires and/or cables.

4. An ultrasound-welding appliance as claimed in Claim 1, characterised in that the bearing and lifting device (20) for the anvil (210) has a pressure arm (15) for applying the welding force.

5. An ultrasound-welding appliance as claimed in Claim 4, characterised in that the anvil (210) can be interchangeably set on a protruding pin (16) of the pressure arm (15).

6. An ultrasound-welding appliance as claimed in Claim 1, <u>characterised in that</u> the sonot rode (2) has a recess (201) on the front surface (200) of the sonotrode head (20).

7. An ultrasound-welding appliance as claimed in Claim 6, <u>characterised in that</u> the recess (201) is open towards the peripheral area of the sonotrode head (20), whereby the anvil (210) is slidably positioned in the recess (201).

8. An ultrasound-welding appliance as claimed in Claim 7, <u>characterised in that</u> the recess (201) in the front surface of the sonotrode (200) has at least one projection (202, 203) which cooperates with a projection (211) of the slidable anvil (210) to form the compression space, by which means working surfaces (206, 207, 212, 213) are formed in the recess (201) on the one hand in the direction of oscillation of the sonotrode (2) and on the other hand on the anvil (210), perpendicular to its direction of movement.

9. An ultrasound-welding appliance as claimed in Claim 8, <u>characterised in that</u> the front surface (200) of the sonotrode (2), which is set back in the direction of oscillation, together with the anvil (210) forms a compression space (220) for the ends (250) of wires and/or cables, which is defined by five surfaces.

## Revendications

1. Dispositif de soudage par ultrasons pour des pièces à traiter métalliques, notamment pour relier des fils et/ou des torons, comportant une unité vibratoire (1 - 3) constituée par un transducteur à ultrasons (1) et une sonotrode à ultrasons (2) utilisée en tant qu'électrode active de soudage et en amont de laquelle est branché un élément de transformation (3) servant à réaliser l'adaptation des amplitudes des ultrasons, ainsi qu'une enclume (210) formant contre-électrode, et dans lequel la sonotrode (2) et l'enclume (210) sont déplaçables l'une par rapport à l'autre de manière à former un espace de compression (220, 230) et l'enclume (210) est reliée mécaniquement à l'unité vibratoire (1 - 3), tout en en étant découplée du point de vue des vibrations, et dans lequel l'unité vibratoire (1 - 3) est reliée pour sa part, en étant découplée vis-à-vis des vibrations, à un dispositif de manipulation qui porte de façon analoque un dispositif de support et de levage (10) pour l'enclume (210), caractérisé par le fait que le dispositif de manipulation est un tube de support (5) dans lequel la sonotrode (2) et/ou l'élément de transformation (3) sont supportés dans les plans contenant leurs noeuds de vibrations, et que le tube de support (5) se prolonge, à partir du plan des noeuds de vibrations de la sonotrode (2), à travers le dispositif (10) de support et de levage de l'enclume (210), sous la forme d'un support annulaire entourant la sonotrode (2) et s'étendant au-delà de la tête (20) de cette dernière.

2. Dispositif de soudage par ultrasons suivant la revendication 1, caractérisé par le fait que le support annulaire (10) est fermé par une plaque de fermeture (3) comportant au moins une ouverture en forme de fenêtre (31, 32).

3. Dispositif de soudage par ultrasons suivant la revendication 2, caractérisé par le fait que les ouvertures en forme de fenêtres (31, 32) comportent des coulisseaux (35, 36) chargés par des ressorts et qui servent de dispositif de serrage pour les fils et/ou les torons.

4. Dispositif de soudage par ultrasons suivant la revendication 1, caractérisé par le fait que le dispositif de support et de levage (20) pour l'enclume (210) comporte un piston de compression (15) servant à fournir la force de soudage.

5. Dispositif de soudage par ultrasons suivant la revendication 4, caractérisé par le fait que l'enclume (210) peut être enfichée, sous la forme d'une pièce interchangeable, sur une tige saillante (16) du piston de compression (15).

6. Dispositif de soudage par ultrasons suivant la revendication 1, caractérisé par le fait que la sonotrode (2) comporte, sur la surface frontale (200) de sa tête (20), un évidement (201).

7. Dispositif de soudagepar ultrasons suivant la revendication 6, caractérisé par le fait que l'évidement (201) est ouvert en direction de la surface circonférentielle de la tête (20) de la sonotrode, l'enclume (210) étant disposée sous la forme d'un poussoir dans l'évidement (201).

8. Dispositif de soudage par ultrasons suivant la revendication 7, caractérisé par le fait que l'évidement (201) ménagé dans la surface frontale (200) de la sonotrode comporte au moins une partie saillante (202, 203) servant à former l'espace de compression en coopération avec une partie saillante (211) de l'enclume déplaçable (210), ce qui a pour effet que des surfaces de travail (206, 207, 212, 213) peuvent être formées dans l'évidement (201) dans la direction de vibration de la sonotrode (2) d'une part et sur l'enclume (210) d'autre part, perpendiculairement à la direction de déplacement de cette dernière.

9. Dispositif de soudage par ultrasons suivant la revendication 8, caractérisé par le fait que la surface frontale (200) de la sonotrode, qui est disposée en retrait dans la direction de vibration forme, avec l'enclume (210), un espace de compression (220), formé par cinq surfaces, pour les extrémités (250) des fils et/ou des torons.

FIG 1

FIG 2

FIG 3

FIG 4

FIG 5